Europäisches Patentamt

**European Patent Office**

**Office européen des brevets**

(11) Publication number: **0 113 578**
A2

(12) **EUROPEAN PATENT APPLICATION**

(21) Application number: **83307823.1**

(22) Date of filing: **21.12.83**

(51) Int. Cl.³: **B 60 C 15/00**
**B 60 C 9/02**

(30) Priority: **24.12.82 JP 234284/82**

(43) Date of publication of application:
**18.07.84 Bulletin 84/29**

(84) Designated Contracting States:
**DE FR GB IT**

(71) Applicant: **SUMITOMO RUBBER INDUSTRIES LIMITED**
**No. 1-1, Tsutsui-cho 1-chome**
**Chuo-ku Kobe-shi Hyogo-ken(JP)**

(72) Inventor: **Ikeda, Kazushige**
**533-6, Nakao Uozumi-cho**
**Akashi-shi Hyogo-ken(JP)**

(74) Representative: **Arthur, Bryan Edward et al,**
**Withers & Rogers 4 Dyer's Buildings Holborn**
**London EC1N 2JT(GB)**

(54) **Tyre.**

(57) A tyre characterised by simplified forming process and reduced manufacturing costs, provided with its tread sidewall extending radially inwardly from both ends thereof, bead portion located radially inward of said sidewall parts and toroidal carcasses, the end of which are folded back around bead cores, said carcasses each being composed of at least one ply, the end of which overlaps the other at the tread and at least one another ply, the end of which terminates at the sidewall or the bead portion.

Fig 1

EP 0 113 578 A2

- 1 -

# T Y R E

The present invention relates to a tyre, especially a motorcycle tyre characterised by simplified forming process and reduced manufacturing costs.

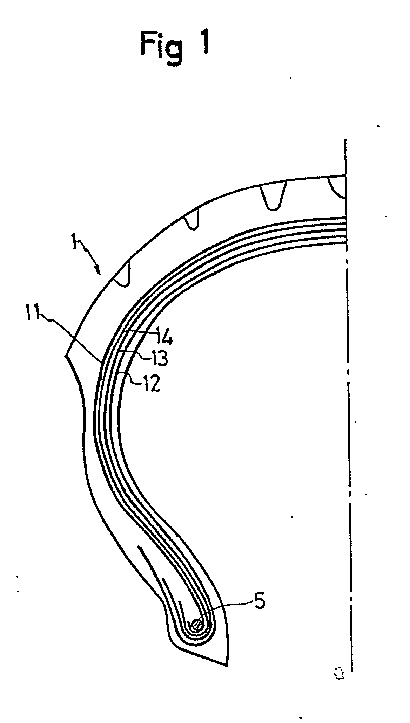

Heretofore, the construction of a light vehicle tyre, e.g. motorcycle tyres employed is such that, as shown in Fig. 1 which shows a partial sectional view of the conventional tyre, carcass plies (11), (12), (13) and (14) are all folded back around bead cores (5), their ends all terminating at the bead portion and, furthermore, the cords of the carcass plies are arranged at a certain angle to the circumferential direction so that the plies intersect each other. This is the so-called cross-ply tyre. As cars' speed-up has been advanced recently in accompaniment with the arrangement of roads by paving, demand for driving stability at high speed running is increasing in the field of motorcycle tyres. For enhancing the driving stability at the time of high speed running, high rigidity and strength of the tread part are necessary. For this purpose, increasing the number of plies of the carcass or employing the breaker structure is contemplated. However, these methods result in increased number of plies used in one tyre, inevitably giving rise to higher costs of materials, and also increased time for the formation, causing lower forming efficienty, with consequent rise in manufacturing costs. This invention provides a solution to such problems. An object of their invention is to provide a tyre improved in the running stability at the time of high-speed running without raising the manufacturing costs.

The present invention relates to a motorcycle tyre provided with its tread, sidewall radially inwardly extending from both ends thereof, bead portion located radially inward of said sidewall and toroidal carcasses, the ends of which are folded back around bead cores, said carcasses each being composed of at least one ply, the end of which overlaps the other at the tread and at least another ply, the end of which terminates downward of a maximum tyre width position.

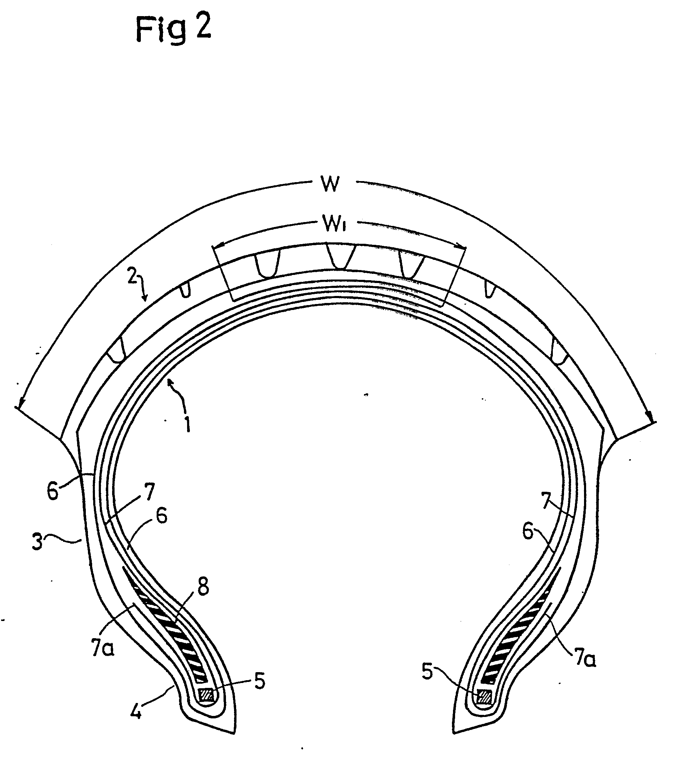

An embodiment of this invention is described with reference to accompanying drawings. Fig. 2 is a sectional view of a motorcycle tyre of this invention. Referring to this figure, the tyre (1) is provided with its tread (2), sidewell (3) radially inwardly extending from both ends of the tread, bead portion (4) located radially inward of said sidewall and toroidal carcasses (6) and (7) which are folded back around bead cores (5) at both ends. The carcasses are each composed of two types of plies, that is, crown overlap plies (6), the ends of which extend to the tread to overlap each other and low turn-up plies (7), the folded back ends of which are located in the bead portion. The overlapping width (W1) of the ends of the crown overlap plies (6) is arbitrarily adjustable, preferably to be set within the range of 30 - 100% of the tread width (W). When arranged on the inner surface side of the tyre and in such a way as to envelop the ply ends (7a) of the low turn-up plies, the plies (6) permit relieving concentration of stress at the ply ends (7a). The ply ends (7a) of low turn-up plies (7), each located in the zone between the bead portion and the sidewall reinforce said zone, but at least said ply ends (7a) are not extended to the tread, because if the ply ends (7a) folded back as described above are extended to the tread, the riding comfortability decreases because of increment of rigidity in the flex-zones of the tyre side parts.

In this instance, for the cords of carcass plies, the so-called cross ply structure in which the cords are arranged normally at an angle of $70^{\circ}$ - $30^{\circ}$ to the circumferential direction of the tyre is employed. But the so-called radial and semi-radial structure with the cords making an angle of $70^{\circ}$ - $90^{\circ}$ to the circumferential direction of the tyre are also usable. In this case, a belt layer provided with cords making relatively shallow angle to the circumferential direction of the tyre for reinforcement of the tread part is utilised. The fibers used for the cords of carcass plies are such organic fibers as nylon, polyester, rayon or armatic polyamide fibers, etc.

According to this invention, the lateral rigidity of the zone ranging from the bead portion toward the sidewall may be reinforced by disposing bead apex (8) made of hard rubber extending with diminishing thickness from the bead core (5) toward the sidewall in the zone surrounded by the carcass plies and their ends. This bead apex (8) should preferably have its top extending to about the central part of the sidewall and have a JIS hardness within the range of $60^{\circ}$ - $90^{\circ}$.

According to this invention, also a reinforcing layer of fiber cords may be placed adjacent to the outside of the carcass and extending from the bead bottom toward the sidewall. The said reinforcing layer is provided exclusively for reinforcing the bead portion. The number of plies and the height of the reinforcing layer are arbitrarily settable and the cords are disposed at an angle of 30⁰ - 60⁰ to the circumferential direction of the tyre.

Accordingly, for the forming of the tyre of this invention, the conventional forming machine is usable without modification. Four ply reinforcement of the bead part and the tread part is enabled by forming of 2 plies and 3 ply reinforcement of the sidewall part becomes feasible, whereby not only performance of the same order as with use of 3 - 4 plies of the conventional method are achieved, but the forming process is simplified. In the above, only one each of crown overlap ply (6) and low turn-up ply (7) is used, but to be sure, plural number of each of them may be used.

Examples:

As embodiments of this invention, rear wheel tyre of 120/90 - 18 in size and of the structure shown in Fig. 2 and that of a structure partly modified therefrom were manufactured for trial. As a comparison example, conventional cross ply structure of the same size was employed. Their detailed specifications and the results of measurements of characteristics by the following methods and cost estimates are shown in Table 1.

(a) Longitudinal rigidity of tyre:

A tyre is assembled with the rim and a certain internal pressure is filled in. Then the deformation of this tyre when a load is applied thereon in vertical direction is measured and is expressed by the relative value to that for Comparison Example 1.

(b) Rigidity of sidewall:

A tyre is assembled with the rim and a certain internal pressure is filled in. It is, then, arranged on a flat plate, with its tread surface in contact therewith. The axial deformation strain of the tyre is measured, when a certain force is applied on the aforementioned flat plate in the axial direction of the tyre, while imposing a load in the vertical direction. The results are expressed by the relative value to those for Comparison Example 1.

(c) Time for the formation:

Time periods required for steps of ply setting, bead setting and tread setting of the tyre forming process are measured and the results are expressed by the relative values to those for Comparison Example 1.

(d) Material cost:

Costs were calculated from the amounts of the materials composing the tyre.

The results listed on the table are material costs for carcass plies.

The appraisal results of Table 1 suggest that embodiments of this invention which show nearly identical performances to those of the conventional structure (Comparison Example 1) are greatly improved in the time for the formation and costs.

Table 1

| | | Comparison Example 1 | Example 1 | Example 2 |
|---|---|---|---|---|
| (1) | Tyre structure | Fig. 1 | Fig. 2 | Note 1) |
| (2) | Carcass structure | Cross ply | Cross ply | Cross ply |
| | Cord angle (to the circumferential direction) | 40° | 40° | 40° |
| | Cord material | Nylon | Nylon | Nylon |
| | Denier | 1260d/2 | 1260d/2 | 1260d/2 |
| | Overlapping width (W1/W) | - | 50% | 50% |
| (3) | Carcass ply width (mm) | | | |
| | First ply | 350 | 520 | 520 |
| | Second ply | 330 | 300 | 300 |
| | Third ply | 310 | - | - |
| | Fourth ply | 290 | - | - |
| | Total | 1280 | 820 | 820 |
| (4) | Bead apex JIS hardness | - | 85° | - |
| | Tread part rigidity | 100 | 100 | 100 |
| | Sidewall part rigidity | 100 | 95 | 80 |
| | Material cost | 100 | 80 | 70 |
| | Time for the formation | 100 | 52 | 50 |

Note 1) A structure of Fig. 2 provided with no bead apex (8).

- 1 -

CLAIMS:

1. A tyre comprising a tread portion and sidewall portions extending radially inwardly from marginal regions of the tread portion, a bead portion located radially inward of each sidewall portion and toroidal carcasses, the ends of which are folded back around bead cores, said carcasses each comprising at least one ply, the end of which overlaps another ply in the region of the tread portion, and at least one other ply, the end of which terminates at the sidewall portion or the bead portion.

2. A tyre according to claim 1 wherein ply cords of the carcass are arranged at an angle of $70^{o}$-$80^{o}$ to the circumferential direction of the tyre.

3. A tyre according to claim 1 or claim 2 wherein the bead portion includes a reinforcing layer of fiber cords.

4. A tyre according to any preceding claim wherein the bead portion includes a bead apex of relatively hard rubber.

Fig 1

1/2

0113578

Fig 2